(19) Europäisches Patentamt
European Patent Office
Office européen des brevets

(11) EP 4 756 896 A1

(12) **EUROPEAN PATENT APPLICATION**
published in accordance with Art. 153(4) EPC

(43) Date of publication:
**10.06.2026 Bulletin 2026/24**

(21) Application number: 24913428.9

(22) Date of filing: **26.12.2024**

(51) International Patent Classification (IPC):
**H01M 4/131** (2010.01)   **H01M 4/62** (2006.01)
**H01M 10/0562** (2010.01)   **C01B 32/158** (2017.01)
**H01M 4/525** (2010.01)   **H01M 4/505** (2010.01)
**H01M 4/1391** (2010.01)   **H01M 10/052** (2010.01)

(52) Cooperative Patent Classification (CPC):
**C01B 32/158; H01M 4/131; H01M 4/1391;
H01M 4/505; H01M 4/525; H01M 4/62;
H01M 10/052; H01M 10/0562; H01M 10/0585**

(86) International application number:
**PCT/KR2024/021188**

(87) International publication number:
**WO 2025/143821 (03.07.2025 Gazette 2025/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   27.12.2023   JP 2023221543

(71) Applicant: **LG Energy Solution, Ltd.
Seoul 07335 (KR)**

(72) Inventors:
• **CHIHARA, Kuniko**
  **Yokohama-shi, Kanagawa 220--0011 (JP)**
• **MATSUBARA, Keiko**
  **Yokohama-shi, Kanagawa 220--0011 (JP)**

(74) Representative: **Goddar, Heinz J.
Boehmert & Boehmert
Anwaltspartnerschaft mbB
Pettenkoferstrasse 22
80336 München (DE)**

(54) **CATHODE MATERIAL, ALL-SOLID-STATE BATTERY, AND METHOD FOR PRODUCING CATHODE MATERIAL**

(57)    Disclosed are a positive electrode material capable of improving the battery characteristics of an all-solid-state battery, an all-sold-state battery, and a method for preparing a positive electrode material. A positive electrode active material for an all-solid-state battery according to an embodiment of the present disclosure includes a lithium transition metal oxide, a solid electrolyte and carbon nanotubes, wherein at least one carbon nanotube of the carbon nanotubes has a length of 100 μm or more.

FIG. 1

EP 4 756 896 A1

**Description**

TECHNICAL FIELD

This application is based on and claims priority from Japanese Patent Application No. 2023-221543 filed on December 27, 2023, the disclosure of which is incorporated herein in its entirety by reference. The present disclosure relates to a positive electrode material, an all-solid-state battery, and a method for preparing a positive electrode material.

BACKGROUND ART

Currently, lithium-ion secondary batteries using a liquid electrolyte have been used widely. However, when using a liquid electrolyte, it is likely that a short-circuit occurs, followed by over-heating or explosion, if deformation or external impact is generated. To improve safety in lithium-ion secondary batteries, recently, all-solid-state batteries not using an organic electrolyte have been spotlighted as next-generation batteries, and research and development of all-solid-state batteries have been conducted diversely.

Carbon nanotubes are known as conductive materials added to an electrode material of an all-solid-state battery. Carbon nanotubes used as conductive materials for all-solid-state batteries according to the related art frequently have a length of 10 $\mu$m or less and at most several tens micrometers (e.g. see, Patent documents 1 to 3.)

Exceptionally, Patent document 4 discloses a positive electrode for an all-solid-state battery which has a molded body of positive electrode mixture containing a positive electrode active material, a sulfide-based solid electrolyte and a conductivity aid, wherein the conductivity aid includes fibrous carbon and particulate carbon, and the molded body of positive electrode mixture has a thickness of 250 $\mu$m or more, and also states that the fibrous carbon preferably has a fiber length of 3-600 $\mu$m. However, Patent document 4 does not disclose why the above-defined numeral rangesare preferred and merely shows an embodiment using fibrous carbon, VGCF (vapor grown carbon fiber), available from Showa Denko as an embodiment actually demonstrating its effects. Herein, VGCF has a fiber length of approximately 10 $\mu$m, and Patent document 4 discloses no particular test result about carbon nanotubes having a length exceeding 10 $\mu$m.

[References]

[Patent documents]

Patent document 1: Japanese patent publication No. 2020-507893
Patent document 2: Japanese patent publication No. 2022-529987
Patent document 3: Japanese patent laid-open No. 2023-132317
Patent document 4: Japanese patent laid-open No. 2021-144906

DISCLOSURE

Technical Problem

Even if referring to the above-mentioned Patent documents, the reason why carbon nanotubes having a length exceeding several tens micrometers are avoided is not clear. However, the inventors of the present disclosure have found that carbon nanotubes having a length of approximately 50 $\mu$m strongly tend to aggregate among themselves and are difficult to be dispersed sufficiently in a positive electrode, in carrying out the present disclosure. The inventors of the present disclosure guess that use of carbon nanotubes having a length exceeding several tens micrometers as conductive materials has been recognized not to improve battery performance significantly as a result of the above-mentioned feature.

Battery characteristics, such as charge/discharge capacity or rate characteristics, of all-solid-state batteries are improved to a certain degree by adding conventionally used carbon nanotubes having a length equal to or smaller than several tens micrometers. However, batteries with higher performance have been increasingly in need, and further improvement of battery characteristics is required.

The present disclosure is designed to solve the problems of the related art, and therefore the present disclosure is directed to providing a positive electrode material which can improve battery characteristics of all-solid-state batteries, an all-solid-state battery, and a method for preparing a positive electrode material.

Technical Solution

The inventors of the present disclosure thought that use of carbon nanotubes having a length of 100 $\mu$m or more as conductive materials would efficiently form an electron conduction pathamong electrode active materials, thereby providing improved battery characteristics. Therefore, the inventors of the present disclosure have examined effects of use of carbon nanotubes having different lengths exceeding 50 $\mu$m upon battery characteristics and have found that use of carbon nanotubes having a length of 100 $\mu$m or more inhibits the tendency of aggregation generated in carbon nanotubes having a length of approximately 50 $\mu$m. As a result, the inventors of the present disclosure found long carbon nanotubes suitable for practical use. The present disclosure is based on this finding.

The present disclosure may cover the following embodiments.

[1] A positive electrode material for an all-solid-state battery, including:a lithium transition metal oxide,

a solid electrolyte, and
carbon nanotubes,
wherein at least one carbon nanotube of the carbon nanotubes has a length of 100 $\mu$m or more.

[2] The positive electrode material as defined in [1], wherein at least one carbon nanotube of the carbon nanotubes has a length of 100-500 $\mu$m.

[3] The positive electrode material as defined in [1], wherein at least one carbon nanotube of the carbon nanotubes has a length of 100-200 $\mu$m.

[4] A positive electrode material for an all-solid-state battery, including: positive electrode active material particles containing a lithium transition metal oxide and having an average particle diameter of 1-20 $\mu$m,

a solid electrolyte, and
carbon nanotubes which are in contact with a plurality of positive electrode active material particles to form an electron conduction path among the positive electrode active material particles.

[5] The positive electrode material as defined in any one of [1] to [4], wherein the carbon nanotubes are contained in an amount of 0.01-10 wt% in the positive electrode material.

[6] The positive electrode material as defined in any one of [1] to [5], wherein the carbon nanotubes are multi-walled carbon nanotubes.

[7] The positive electrode material as defined in any one of [1] to [6], wherein the carbon nanotubes form an electron conduction path among a plurality of particles that are not in contact with one another.

[8] The positive electrode material as defined in any one of [1] to [7], wherein the carbon nanotubes are untangled while not forming aggregates or bundlessubstantially.

[9] The positive electrode material as defined in any one of [1] to [8], wherein the lithium transition metal oxide includes nickel at 50 mol% or more based on the total weight of transition metals.

[10] The positive electrode material as defined in any one of [1] to [9], wherein the solid electrolyte is a sulfide-based solid electrolyte.

[11] The positive electrode material as defined in any one of [1] to [10], wherein the carbon nanotubes have an average diameter of 2-20 nm.

[12] The positive electrode material as defined in any one of [1] to [11], wherein the carbon nanotubes have an aspect ratio of 10,000-100,000.

[13] An all-solid-state battery including: a positive electrode including the positive electrode material as defined in any one of [1] to [12],

a negative electrode, and
a solid electrolyte layer between the positive electrode and the negative electrode.

[14] A method for preparing a positive electrode material for an all-solid-state battery, including a step of mixing a lithium transition metal oxide, a solid electrolyte and carbon nanotubes having a length of 100 $\mu$m or more.

Advantageous Effects

According to the present disclosure, it is possible to provide a positive electrode material which can improve battery characteristics of an all-solid-state battery, an all-solid-state battery, and a method for preparing a positive electrode material.

DESCRIPTION OF DRAWINGS

FIG. 1 is a schematic view illustrating a microscopic structure of a positive electrode material according to an embodiment of the present disclosure.

FIG. 2 is a schematic view illustrating a structure of an all-solid-state battery according to an embodiment of the present disclosure.

FIG. 3 is a graph illustrating a change in discharge capacity depending on discharge rate in Examples 1 to 3 and Comparative examples 1 and 2.

FIG. 4 is a graph illustrating a change in discharge capacity depending on discharge rate in Examples 1 to 3 and Comparative examples 1 and 2.

FIG. 5 is a graph illustrating cycle characteristics of Examples 1 to 3 and Comparative example 1.

BEST MODE

Hereinafter, a positive electrode material, an all-solid-state battery and a method for preparing a positive electrode material according to an embodiment of the present disclosure will be described. Meanwhile, the following embodiment showing an embodiment of the present disclosure does not limit the present disclosure, and modifications can be made thereto without departing from the scope of the disclosure. In addition, each configuration and each feature of embodiments can be arbitrarily combined.

Hereinafter, the singular forms "a", "an" and "the" are intended to include the plural forms as well, unless the context clearly indicates otherwise.

As used herein, if it is described that a part of a layer, film, region, plate, etc. is 'right above' another part, this includes not only the case where it is 'right above' another part, but also the case where there is another part in the middle. Conversely, if it is described that a part of a layer, film, region, plate, etc. is 'right below' another part, this includes not only the case where it is 'right below' the other part, but also the case where there is another part in the middle. In addition, the expression 'be disposed above' in the specification may include cases where it is disposed at the bottom as well as at the top.

As used herein, 'average particle diameter $(D_{50})$' may be defined as a particle diameter corresponding to 50% in a volume cumulative particle diameter distribution curve of particles. The average particle diameter $(D_{50})$ may be determined by using a laser diffraction method, for example. The laser diffraction method is generally capable of particle diameter determination from a sub-micron range to several millimeters and can provide a result with high reproducibility and high resolution.

As used herein, 'single-walled carbon nanotubes (SWCNTs)' means carbon nanotubes in which a tubular wall formed of carbon atoms includes a monoatomic layer (i.e. a single layer of graphene sheet). In addition, 'multi-walled carbon nanotubes (MWCNTs)' means carbon nanotubes in which a tubular wall formed of carbon atoms includes multiple atomic layers (i.e. multiple layers of graphene sheets).

<Positive electrode material>

A positive electrode material according to an embodiment of the present disclosure includes a lithium transition metal oxide, a solid electrolyte and carbon nanotubes, wherein at least one carbon nanotube of the carbon nanotubes has a length of 100 $\mu$m or more.

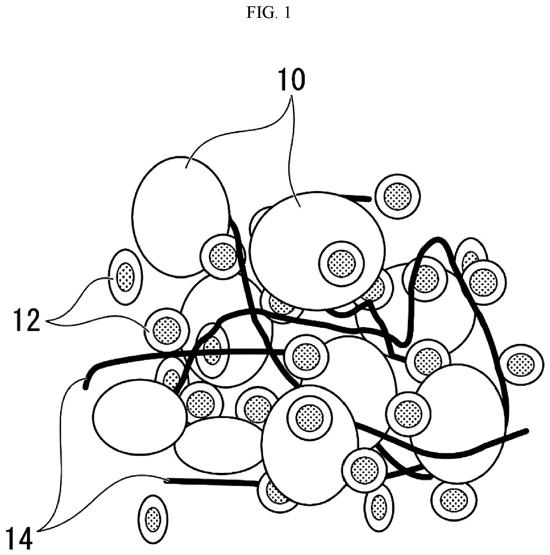

FIG. 1 is a schematic view illustrating a microscopic structure of a positive electrode material. The positive electrode material includes lithium transition metal oxide particles 10, solid electrolyte particles 12 and carbon nanotubes 14. In FIG. 1, the solid electrolyte particles 12 are smaller than the lithium transition metal oxide particles 10 and lie around the lithium transition metal oxide particles 10. During charge/discharge, lithium ions migrate between the lithium transition metal oxide particles 10 and the solid electrolyte particles 12 that are in contact with one another. The carbon nanotubes 14 are entangled with the lithium transition metal oxide particles 10. The carbon nanotubes 14 are partially in contact with a plurality of lithium transition metal oxide particles 10. During charge/discharge, the carbon nanotubes 14 may form an electron conduction path from the lithium transition metal oxide particles 10 to the other particles 10 or to a current collector. Electron conduction occurs in conjunction with lithium-ion conduction.

[Lithium transition metal oxide]

The lithium transition metal oxide functions as a positive electrode active material which cooperates with the negative electrode active material described hereinafter and allows intercalation/deintercalation of lithium ions at a positive electrode, during charge/discharge.

The lithium transition metal oxide may be one used generally as a positive electrode active material in the art. The lithium transition metal oxide may be any compound as long as it is capable of reversible lithium intercalation/deintercalation and is not limited to any particular type. Particular examples of the lithium transition metal oxide may include lithium metal composite oxides containing lithium and at least one metal, such as cobalt, manganese, nickel, copper, vanadium, aluminum, etc. More particularly, such lithium metal composite oxides may include: lithium-manganese oxides (e.g. $LiMnO_2$, $LiMnO_3$, $LiMn_2O_3$, $LiMn_2O_4$, etc.); lithium-cobalt oxides (e.g. $LiCoO_2$, etc.); lithium-nickel oxides (e.g. $LiNiO_2$, etc.); lithium-copper oxides (e.g. $Li_2CuO_2$, etc.); lithium-vanadium oxides (e.g. $LiV_3O_8$, etc.); lithium-nickel-manganese oxides (e.g. $LiNi_{1-z}Mn_zO_2(0<z<1)$, $LiMn_{2-z}Ni_zO_4(0<z<2)$, etc.); lithium-nickel-cobalt oxides (e.g. $LiNi_{1-y}Co_yO_2(0<y<1)$, etc.); lithium-manganese-cobalt oxides (e.g. $LiCo_{1-z}Mn_zO_2(0<z<1)$, $LiMn_{2-y}Co_yO_4(0<y<2)$, etc.); lithium-nickel-manganese-cobalt oxides (e.g. $Li(Ni_xCo_yMn_z)O_2(0<x<1, 0<y<1, 0<z<1, x+y+z=1)$, $Li(Ni_xCo_yMn_z)O_4(0<x<2, 0<y<2, 0<z<2, x+y+z=2)$, etc.); lithium-nickel-cobalt-metal (M) oxides (e.g. $Li(Ni_xCo_yMn_zM_w)O_2$ (wherein M is selected from the group consisting of Al, Fe, V, Cr, Ti, Ta, Mg and Mo, $0<x<1, 0<y<1, 0<z<1, 0<w<1, x+y+z+w=1$), etc.); Li-excesssolid solution positive electrode (e.g. $pLi_2MnO_3$-$(1-p)Li(Ni_xCo_yMn_z)O_2(0<x<1, 0<y<1, 0<z<1, x+y+z=1, 0<p<1)$; those compounds in which transition metal elements are partially substituted with one or more different metal elements, or the like. The positive electrode active material layer may include one of the above-listed compounds, or two or more of them. However, the scope of the present disclosure is not limited thereto.

Particularly, in the case of a lithium transition metal oxide having a high content of nickel effective for providing a battery with high capacity, the lithium transition metal oxide preferably includes nickel at 50 mol% or more, based on the total weight of transition metals. Particular examples of such a lithium transition metal oxide may include: $Li_aNiO_2$ $(0.5≤a≤1.5)$; $Li_a(Ni_xCo_yMn_z)O_2(0.5≤a≤1.50.5≤x<1, 0<y<0.5, 0<z<0.5, x+y+z=1)$; $Li_a(Ni_xCo_yMn_z)O_2(0.7<x<1, 0<y<0.3, 0<z<0.3, x+y+z=1)$; $Li_a(Ni_xCo_yMn_z)O_2(0.8<x<1, 0<y<0.2, 0<z<0.2, x+y+z=1)$; $Li_a(Ni_xCo_yMn_z)O_2(0.9<x<1, 0<y<0.1, 0<z<0.1, x+y+z=1)$; $Li_aNi_{1-y}Co_yO_2(0.5≤a≤1.5, 0<y≤0.5)$; $Li_aNi_{1-z}Mn_zO_2(0.5≤a≤1.5, 0<z≤0.5)$; $Li_a(Ni_xCo_yMn_z)O_4$ $(0.5≤a≤1.5, 1≤x<2, 0<y<1, 0<z<1, x+y+z=2)$; $Li_a(Ni_xCo_yM_w)O_2$(wherein M is at least one element selected from the group consisting of Al, Fe, V, Cr, Ti, Ta, Mg, Mo, Zr, Zn, Ga and In, $0.5≤a≤1.5, 0.5≤x<1, 0<y<0.5, 0<w<0.5, x+y+w=1$); $Li_a(Ni_xCo_yMn_zM_w)O_2$(wherein M is at least one element selected from the group consisting ofAl, Fe, V, Cr, Ti, Ta, Mg, Mo, Zr, Zn, Ga and In, $0.5≤a≤1.5, 0.5≤x<1, 0<y<0.5, 0<z<0.5, 0<w<0.5, x+y+z+w=1$); those compounds in which transition metal elements are partially substituted with one or more different metal elements(e.g. one or more element selected from Al, Fe, V, Cr, Ti, Ta, Mg, Mo, Zr, Zn, Ga and In); those compounds in which oxygen atoms are partially substituted with at least one non-metal metal element (e.g. one or more elements selected from P, F, S and N), or the like. Preferably, the lithium transition metal oxide is represented by $Li_aNi_xM_yO_2$(wherein M is at least one metal element other than Ni, such as at least one element selected from the group consisting of Al, Fe, Co, Mn, V, Cr, Ti, Ta, Mg, Mo, Zr, Zn, Ga and In, $0<a≤1.05, x+y=1$), wherein x may have a value, such as 0.5 or more, 0.6 or more, 0.7 or more, 0.8 or more, or 0.9 or more, and 1 or less, 0.9 or less, 0.8 or less, 0.7 or less, or 0.6 or less. The positive electrode active material may include at least one of the above-listed compounds, but is not limited thereto. In addition, in the same particle, there may be a distribution of the concentration of substitution between the inner part and the surface layer. Further, the positive electrode material may be surface-coated particles. For example, the particles may be surface-coated with a metal oxide, lithium transition metal oxide, polymer, or the like, but are not limited thereto.

Particularly, in terms of improvement of capacity characteristics and stability of a battery, the lithium transition metal oxide may be preferably $Li_aNiO_2$, $Li_a(Ni_{0.5}Mn_yCo_z)O_2$ $(y+z=0.5)$, $Li_a(Ni_{0.6}Mn_yCo_z)O_2$ $(y+z=0.4)$, $Li_a(Ni_{0.7}Mn_yCo_z)O_2$ $(y+z=0.3)$, $Li_a(Ni_{0.8}Mn_yCo_z)O_2$ $(y+z=0.2)$, $Li_a(Ni_{0.8}Co_yMn_zAl_w)O_2$ $(y+z+w=0.2)$, $Li_a(Ni_{0.85}Co_yMn_z)O_2$ $(y+z=0.15)$, $Li_a(Ni_{0.85}Co_yMn_zAl_w)O_2$ $(y+z+w=0.15)$, $Li_a(Ni_{0.9}Co_yMn_z)O_2$ $(y+z=0.1)$, $Li_a(Ni_{0.9}Co_yMn_zAl_w)O_2$ $(y+z+w=0.1)$, $Li_a(Ni_{0.9}Co_yMn_z)O_2$ $(y+z=0.1)$, $Li_a(Ni_{0.95}Co_yMn_zAl_w)O_2$ $(y+z+w=0.05)$, or the like. Herein, alla values may satisfy $0.5≤a≤1.5$, preferably $1.0≤a≤1.5$.

More particularly, the lithium transition metal oxide may be preferably $LiNiO_2$, $Li(Ni_{0.5}Mn_{0.3}Co_{02})O_2$, $Li(Ni_{0.6}Mn_{0.2}Co_{0.2})O_2$, $Li(Ni_{0.7}Mn_{0.15}Co_{0.15})O_2$, $Li(Ni_{0.8}Mn_{0.1}Co_{0.1})O_2$, $Li(Ni_{0.8}Co_{0.15}Al_{0.05})O_2$, $Li(Ni_{0.8}Co_{0.1}Mn_{0.05}Al_{0.05})O_2$, $Li(Ni_{0.85}Co_{0.10}Mn_{0.05})O_2$, $Li(Ni_{0.85}Co_{0.10}Mn_{0.03}Al_{0.02})O_2$, $Li(Ni_{0.9}Co_{0.05}Mn_{0.05})O_2$, $Li(Ni_{0.}Co_{0.05}Al_{0.05})O_2$, $Li(Ni_{0.95}Co_{0.03}Mn_{0.02})O_2$, $Li(Ni_{0.95}Co_{0.03}Al_{0.02})O_2$, or the like.

For example, the lithium transition metal oxide may have a particle diameter of 10 nm to 20 μm, 50 nm to 18 μm, 100 nm to 15 μm, 200 nm to 13 μm, 500 nm to 12 μm, or 1 to 10 μm. When the lithium transition metal oxide has a particle diameter of 10 nm or more, it is possible to inhibit surface deterioration of particles. When the lithium transition metal oxide has a particle diameter of 20 μm or less, a lithium diffusion path is not elongated excessively, and an electron conduction path may be efficiently formed by the carbon nanotubes as described hereinafter.

Preferably, a metal oxide-containing coating layer is formed on the surface of the lithium transition metal oxide. The metal oxide may be at least one selected from the group consisting of $LiNbO_2$, $LiNbO_3$, $LiCoO_2$ and $Li_2TiO_3$. More preferably, a coating layer containing $LiNbO_2$ is formed on the surfaces of the lithium transition metal oxide particles. Such a coating layer may reduce the internal resistance of the positive electrode.

[Solid electrolyte]

A solid electrolyte assists lithium ion transfer between a positive electrode active material and a negative electrode active material. Particles of a solid electrolyte may be in contact with particles of a positive electrode active material, particles of a negative electrode active material or particles of another solid electrolyte to mediate lithium ion transfer.

Any solid electrolyte may be used as long as it is a material with high ion conductivity (e.g. ion conductivity of $10^{-5}$ s/m or more, preferably $10^{-4}$ s/m or more) so that it may function mainly to transfer lithium ions in an electrode, and the solid electrolyte is not limited to any specific ingredient.

For example, the solid electrolyte may be at least one selected from the group consisting of a sulfide-based solid electrolyte, an oxide-based solid electrolyte and a polymer-based solid electrolyte. The polymer-based solid electrolyte may be a solid electrolyte formed by adding a polymer resin to a solvated lithium salt, or a polymer gel electrolyte formed by impregnating a polymer resin with an organic electrolyte containing an organic solvent and a lithium salt, ionic liquid, monomer or oligomer, etc. Meanwhile, the sulfide-based solid electrolyte has high ion conductivity, and the oxide-based solid electrolyte shows excellent electrochemical stability. Therefore, a suitable solid electrolyte ingredient may be selected and used depending on characteristics of solid electrolytes and purpose of use of batteries. Preferably, the solid electrolyte is a sulfide-based solid electrolyte.

The sulfide-based solid electrolyte contains sulfur (S) and has conductivity of metal ions that belong to Group 1 or Group 2 in the Periodic Table. For example, the sulfide-based solid electrolyte may include Li-P-S glass or Li-P-S glass ceramic. The sulfide-based solid electrolyte may include a vitreous solid electrolyte, a crystalline solid electrolyte and a vitreous ceramic solid electrolyte. Particular examples of the sulfide-based solid electrolyte may include, but are not limited to: $Li_2S$-$P_2S_5$, $Li_2S$-$LiI$-$P_2S_5$, $Li_2S$-$LiI$-$Li_2O$-$P_2S_5$, $Li_2S$-$LiBr$-$P_2S_5$, $Li_2S$-$Li_2O$-$P_2S_5$, $Li_2S$-$Li_3PO_4$-$P_2S_5$, $Li_2S$-$P_2S_5$-$P_2O_5$, $Li_2S$-$P_2S_5$-$SiS_2$, $Li_2S$-$P_2S_5$-$SnS$, $Li_2S$-$P_2S_5$-$Al_2S_3$, $Li_2S$-$GeS_2$, $Li_2S$-$GeS_2$-$ZnS$, argyrodite-based solid electrolyte (e.g. $Li_6PS_5X$(X: Cl, Br, I), etc.), LGPS-based solid electrolyte ($Li_{10}GeP_2S_{12}$, $Li_{3.25}Ge_{0.25}P_{0.75}S_4$, etc.), $Li_7P_3S_{11}$, or the like. For example, the solid electrolyte may include at least one selected from the above-listed compounds.

The oxide-based solid electrolyte contains oxygen (O) and has conductivity of metal ions that belong to Group 1 or Group 2 in the Periodic Table. Particular examples of the oxide-based solid electrolyte may include, but are not limited to: LLTO compounds, $Li_6La_2CaTa_2O_{12}$, $Li_6La_2ANb_2O_{12}$(wherein A is Ca or Sr), $Li_2Nd_3TeSbO_{12}$, $Li_3BO_{2.5}N_{0.5}$, $Li_9SiAlO_8$, LAGP compounds, LATP compounds, $Li_{1+x}Ti_{2-x}Al_xSi_y(PO_4)_{3-y}$(wherein $0 \leq x \leq 1$, $0 \leq y \leq 1$), $LiAl_xZr_{2-x}(PO_4)_3$(wherein $0 \leq x \leq 1$, $0 \leq y \leq 1$), $LiTi_xZr_{2-x}(PO_4)_3$(wherein $0 \leq x \leq 1$, $0 \leq y \leq 1$), LISICON compounds, LIPON compounds, perovskite compounds, NASICON compounds and LLZO compounds. For example, the solid electrolyte may include at least one selected from the above-listed compounds.

The polymer-based solid electrolyte may include, for example, a polyester polymer, polycarbonate polymer, acrylate polymer, polysiloxane polymer, phosphazene polymer, polyethylene derivative, alkylene oxide derivative, such as polyethylene oxide (PEO) or polypropylene oxide (PPO), phosphate polymer, polyaziridine, polyester sulfide, polyvinyl alcohol, polyvinylidene fluoride, polymer containing an ionically dissociable group, or the like. For example, the solid electrolyte may include at least one selected from the above-listed compounds.

The solid electrolyte may be contained in an amount of 1-70 wt%, 5-50 wt%, 10-45 wt%, or 20-40 wt%, based on the total weight of the positive electrode active material. When the content of the solid electrolyte particles is 1 wt% or more, it is possible to sufficiently form a lithium ion conduction path by allowing the solid electrolyte particles to surround the particle surfaces of the lithium transition metal oxide. When the content of the solid electrolyte is 50 wt% or less, it is possible to inhibit the solid electrolyte particles from being spaced apart from the lithium transition metal oxide and causing aggregation.

For example, the solid electrolyte has a particle diameter of 10 nm to 10 $\mu$m, 50 nm to 5 $\mu$m, 100 nm to 1 $\mu$m, or 200 nm to 500 $\mu$m. When the solid electrolyte has a particle diameter that falls within the above-defined range, lithium ion transfer among active materials may be carried out smoothly at a suitable level of electrode density or tap density.

[Carbon nanotubes]

Carbon nanotubes are in contact mostly with surfaces of positive electrode active material particles or a positive electrode current collector to contribute to formation of a conductive network among the positive electrode active material particles or between the positive electrode active material particles and the positive electrode current collector. The carbon nanotubes are not in the form of bundles but most of them exist in a single strand, and are disposed mainly on the surface of the positive electrode active material.

Among the carbon nanotubes contained in the positive electrode material, at least one carbon nanotube has a length of 100 $\mu$m or more. For example, the carbon nanotube may have a length of 100-500 $\mu$m, 100-450 $\mu$m, 100-400 $\mu$m, 100-350 $\mu$m, 100-300 $\mu$m, 100-250 $\mu$m, or 100-200 $\mu$m. The carbon nanotube may have a length of 110 $\mu$m or more, 120 $\mu$m or more, 130 $\mu$m or more, 140 $\mu$m or more, 150 $\mu$m or more, 180 $\mu$m or more, 200 $\mu$m or more, 210 $\mu$m or more, 230 $\mu$m

or more, or 250 μm or more. It is thought from the results of the following examples and comparative examples that carbon nanotubes having a length of 100 μm or more can efficiently form an electron conduction path among active material particles or between active material particles and a current collector while not causing excessive aggregation among themselves. Meanwhile, carbon nanotubes having a length of 500 μm or less can inhibit a close contact among extremely long carbon nanotubes and aggregation thereof in the form of bundles.

Preferably, the carbon nanotubes in the positive electrode material may have an average length of 100 μm or more, 100-500 μm, 100-450 μm, 100-400 μm, 100-350 μm, 100-300 μm, 100-250 μm, or 100-200 μm. The carbon nanotubes may have an average length of 110 μm or more, 120 μm or more, 130 μm or more, 140 μm or more, 150 μm or more, 180 μm or more, 200 μm or more, 210 μm or more, 230 μm or more, or 250 μm or more. As described above, carbon nanotubes having a length of 100 μm or more does not cause excessive aggregation among themselves when manufacturing an electrode, and can efficiently form an electron conduction path among active material particles or between active material particles and a current collector. In addition, such carbon nanotubes can efficiently form a conductive network even with a small content of conductive material. Herein, 'average length' refers to the average value of the lengths of the top 100 carbon nanotubes and the bottom 100 carbon nanotubes observed by scanning electron microscopy (SEM).

Preferably, carbon nanotubes are untangled while not forming aggregates or bundles substantially. For example, when observed by SEM, it is preferred that at least 50% (on the basis of number), at least 60%, at least 70%, at least 80%, at least 90%, or 100% of the carbon nanotubes in the positive electrode material are not in contact with two or more other carbon nanotubes. In a variant, when observed by SEM, it is preferred that at least 50% (on the basis of number), at least 60%, at least 70%, at least 80%, at least 90%, or 100% of the carbon nanotubes in the positive electrode material are not in contact with other carbon nanotubes at two or more points. In another variant, when observed by SEM, it is preferred that at least 50% (on the basis of number), at least 60%, at least 70%, at least 80%, at least 90%, or 100% of the carbon nanotubes in the positive electrode material are not in contact with other carbon nanotubes.

Although there is no particular limitation, the carbon nanotubes may have an average diameter of 1 nm to 3 μm, 5 nm to 1 μm, 10 nm to 500 nm, or 20 nm to 100 nm. In a particular embodiment, the carbon nanotubes may have an average diameter of 2 nm or more, 5 nm or more, 7 nm or more, or 10 nm or more. In another particular embodiment, the carbon nanotubes may have an average diameter of 20 nm or less, 15 nm or less, or 10 nm or less. When the above-defined ranges are satisfied, the carbon nanotubes are easily dispersed in the positive electrode while not causing excessive aggregation. Herein, 'average diameter' refers to the average value of the diameters of the top 100 carbon nanotubes and the bottom 100 carbon nanotubes observed by scanning electron microscopy (SEM).

Meanwhile, according to an embodiment of the present disclosure, the carbon nanotubes may have an aspect ratio of 10,000-100,000. The aspect ratio may be 10,000 or more, 12,000 or more, 13,000 or more, 15,000 or more, 20,000 or more, 30,000 or more, 50,000 or more, or 70,000 or more. The aspect ratio may be 100,000 or less, 90,000 or less, 85,000 or less, 80,000 or less, 75,000 or less, 70,000 or less, 50,000 or less, 40,000 or less, or 30,000 or less. The diameter and length of the carbon nanotubes may be controlled suitably within a range satisfying the above-defined aspect ratio. In an embodiment, the term 'aspect ratio' may refer to a ratio of length to diameter (length/diameter). In an embodiment, the aspect ratio may refer to a ratio of average length to average diameter (average length/average diameter).

The carbon nanotubes may be single-walled carbon nanotubes or multi-walled carbon nanotubes. Multi-walled carbon nanotubes are manufactured more easily and have higher cost-efficiency, as compared to single-walled carbon nanotubes.

The carbon nanotubes are contained, for example, in an amount of 0.01-10 wt%, 0.05-8 wt%, 0.1-6 wt%, 0.2-5 wt%, 0.5-4 wt%, or 1-3 wt%, based on the total weight of the positive electrode material. When the above-defined range is satisfied, it is possible to form a conductive network efficiently in the positive electrode while maintaining the dispersibility and stability of the carbon nanotubes, and thus it is possible to improve the charge/discharge characteristics of a battery.

The content of the carbon nanotubes is, for example, 0.01-20 wt%, 0.05-15 wt%, 0.05-15 wt%, 0.1-12 wt%, 0.2-10 wt%, 0.5-8 wt%, or 1-5 wt%, based on the total weight of lithium transition metal oxides. When the above-defined range is satisfied, a sufficient amount of carbon nanotubes is present based on lithium transition metal oxides, and thus it is possible to efficiently form a conductive network in the positive electrode.

A positive electrode material for an all-solid-state battery according to another embodiment contains a lithium transition metal oxide and includes positive electrode active material particles having an average particle diameter of 1-20 μm, a solid electrolyte, and carbon nanotubes that are in contact with a plurality of positive electrode active material particles to form an electron conduction path among the positive electrode active material particles.

Since carbon nanotubes have high electron conductivity, when they are in contact with a plurality of positive electrode active material particles, an electron conduction path is formed among the active material particles. The carbon nanotubes have such a length that they can be in contact with a plurality of positive electrode active material particles having an average particle diameter of 1-20 μm. For example, when observed by SEM, it is preferred that at least 50% (on the basis of number), at least 60%, at least 70%, at least 80%, at least 90%, or 100% of the carbon nanotubes in the positive electrode material are in contact with a plurality of positive electrode active material particles.

When viewed from the positive electrode active material particles, it is preferred that an electron conduction path with other active material particles is formed. For example, when observed by SEM, it is preferred that at least 50% (on the basis of number), at least 60%, at least 70%, at least 80%, at least 90%, or 100% of the positive electrode active material particles in the positive electrode material are in contact with carbon nanotubes. In addition, when observed by SEM, it is preferred that at least 50% (on the basis of number), at least 60%, at least 70%, at least 80%, at least 90%, or 100% of the positive electrode active material particles in the positive electrode material are in contact with carbon nanotubes and also the carbon nanotubes are in contact with other positive electrode active material particles.

In another point of view, it is preferred that at least one carbon nanotube has a length larger than the average particle diameter of positive electrode active material particles. For example, at least one carbon nanotube has a length corresponding to at least 5 times, at least 10 times, at least 20 times, or at least 30 times of the average particle diameter of positive electrode active material particles. Preferably, the carbon nanotubes have an average length larger than the average particle diameter of positive electrode active material particles, for example, corresponding to at least 5 times, at least 10 times, at least 20 times, or at least 30 times of the average particle diameter of positive electrode active material particles.

As such, the carbon nanotubes can form an electron conduction path among a plurality of particles that are not in contact with one another. In this manner, it is possible to facilitate electron conduction in the positive electrode, and thus to make the active material particles in the positive electrode to uniformly participate in charge/discharge reactions. As a result, it is possible to improve battery capacity. In addition, since carbon nanotubes have excellent electron conductivity, it is possible to inhibit energy loss, such as heat generation at a high level of electric current. As a result, it is possible to improve rate characteristics (particularly, high-speedcharge/discharge characteristics.)

Meanwhile, it is not essentially required that the carbon nanotubes are in direct contact with the positive electrode active material. For example, when the surfaces of the positive electrode active material particles are coated with a conductive material, such as carbon, the carbon nanotubes are in contact with the positive electrode active material particles by way of such coating, but also in this case, an electron conduction path is formed. Therefore, the contact between the carbon nanotubes and the positive electrode active material particles may not be direct contact and may be indirect contact by way of another configuration, as long as an electron conduction path mediating electron conduction is formed among the positive electrode active material particles by the carbon nanotubes. In addition, the carbon nanotubes may support the positive electrode active material particles through adsorption, but may be simply in contact with the positive electrode active material particles while not supporting the positive electrode active materials. For example, the carbon nanotubes and the positive electrode active material particles may not be adsorbed to each other.

<Method for preparing positive electrode material>

A method for preparing a positive electrode material for an all-solid-state battery according to an embodiment of the present disclosure includes a step of mixing a lithium transition metal oxide, a solid electrolyte and carbon nanotubes having a length of 100 $\mu$m or more.

Reference can be made to the above description about the lithium transition metal oxide, the solid electrolyte and the carbon nanotubes. When they are mixed, an electron conduction path may be formed among the lithium transition metal oxide particles by way of the carbon nanotubes.

The mixing step may be carried out by using a dry mixer, an agitator, a shaker, such as an orbital shaker, a mortar mixer, a milling machine, such as a planetary ball mill,etc. used generally for mixing of powder, but is not limited thereto. The mixing process is not limited to a dry mixing process but may be a wet mixing process of mixing the lithium transition metal oxide, the solid electrolyte and the carbon nanotubes in any liquid medium. Addition of the lithium transition metal, the solid electrolyte and the carbon nanotubes is not limited to any particular order. Also, other additives may be further added.

<All-solid-state battery>

An all-solid-state battery according to an embodiment of the present disclosure includes a positive electrode including the above-described positive electrode material, a negative electrode and a solid electrolyte layer between the positive electrode and the negative electrode.

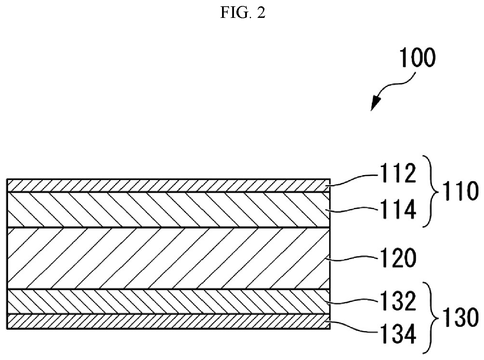

FIG. 2 is a schematic view illustrating a structure of an all-solid-state battery 100 according to an embodiment of the present disclosure. As shown in FIG. 2, the all-solid-state battery 100 includes a positive electrode 110, a solid electrolyte layer 120 and a negative electrode 130 in this order. The positive electrode 110 includes a positive electrode current collector 112 and a positive electrode material layer 114. The negative electrode 130 includes a negative electrode material layer 132 and a negative electrode current collector 134. However, for example, when a negative electrode is formed of metallic lithium alone, the negative electrode material layer 132 and the negative electrode current collector 134 are provided integrally. As a whole, the all-solid-state battery 100 is formed by stacking the positive electrode current collector 112, the positive electrode material layer 114, the solid electrolyte layer 120, the negative electrode material layer 132 and the negative electrode current collector 134 in this order.

[Positive electrode 110]

In the all-solid-state battery 100 according to an embodiment of the present disclosure, the positive electrode 110 includes a positive electrode current collector 112 and a positive electrode active material layer 114 formed on one surface or both surfaces of the positive electrode current collector 112. The positive electrode active material layer 114 may be formed totally or partially on the surface of the positive electrode current collector 112.

(Positive electrode current collector 112)

The positive electrode current collector 112 used for the positive electrode 110 is not particularly limited, as long as it does not cause any chemical change in a battery and has conductivity. Particular examples of the positive electrode current collector 112 may include: stainless steel; aluminum; nickel; titanium; baked carbon; aluminum or stainless steel surface-treated with carbon, nickel, titanium, silver, etc.; or the like.

For example, the positive electrode current collector 112 may have a thickness of 3-500 $\mu$m. The positive electrode current collector 112 may have fine surface irregularities formed on the surface thereof to enhance adhesion with the positive electrode active material. For example, the positive electrode current collector 112 may have various shapes, such as a sheet, a foil, a net, a porous body, a foam, a nonwoven body, or the like.

(Positive electrode active material layer 114)

The positive electrode active material layer 114 may include the above-described positive electrode material. The positive electrode active material layer 114 may further include other conductive materials, binder, optional additives, etc., besides the positive electrode material.

For example, the positive electrode active material layer 114 may have a thickness of 1-500 $\mu$m, 5-250 $\mu$m, 10-200 $\mu$m, 20-150 $\mu$m, or 50-100 $\mu$m.

(Conductive material)

The positive electrode active material layer 114 may further include a conductive material other than the above-described carbon nanotubes. The conductive material is not particularly limited, as long as it does not cause any chemical change and has conductivity. Particular examples of the conductive material may include any one selected from: graphite, such as natural graphite or artificial graphite; a carbon black material, such as carbon black, acetylene black, ketjen black, channel black, furnace black, lamp black or thermal black; conductive fibers, such as carbon fibers including vapor grown carbon fibers (VGCFs) or metallic fibers; carbon fluoride; metal powder, such as aluminum or nickel; conductive whisker, such as zinc oxide or potassium titanate; conductive metal oxide, such as titanium oxide; and a conductive material, such as polyphenylene derivative, or a mixture of two or more of them. The positive electrode active material layer 114 may include, as a conductive material, carbon nanotubes with a length of less than 100 $\mu$m.

(Binder)

The positive electrode active material layer 114 may further include a binder. The binder is used to ensure adhesion among the positive electrode active material particles or adhesion between the positive electrode active material particles and the current collector. The binder may be any conventional binder used in the art and is not limited to any particular type. Particular examples of the binder may include polyvinylidene fluoride-co-hexafluoropropylenecopolymer (PVDF-co-HFP), polyvinyl alcohol, polyacrylonitrile, starch, hydroxypropyl cellulose, regenerated cellulose, polyvinyl pyrrolidone, polytetrafluoroethylene, polyethylene, polypropylene, ethylene-propylene-diene monomer (EPDM), sulfonated EPDM, carboxymethyl cellulose (CMC), styrene-butadiene rubber (SBR), fluoro-rubber, various copolymers thereof, or the like. Such binder materials may be used alone or in combination.

The binder may be used, for example, in an amount of 10 wt% or less, preferably 0.1-5 wt%, based on the total weight of the positive electrode active material layer 114. When the content of the binder satisfies the above-defined range, it is possible to realize excellent electrode adhesion while minimizing an increase in electrode resistance.

[Negative electrode (130)]

The negative electrode 130 may include lithium metal alone, or may include a negative electrode current collector 134 and a negative electrode active material layer 132 formed on one surface or both surfaces of the negative electrode current collector 134. The negative electrode active material layer 132 may be formed totally or partially on the surface of the negative electrode current collector 134.

(Negative electrode current collector 134)

The negative electrode current collector 134 used for the negative electrode is not particularly limited, as long as it does not cause any chemical change in a battery and has conductivity. Particular examples of the negative electrode current collector 134 may include: copper; stainless steel; aluminum; nickel; titanium; baked carbon; copper or stainless steel surface-treated with carbon, nickel, titanium, silver, etc.; aluminum-cadmium alloy; or the like.

For example, the negative electrode current collector 134 may have a thickness of 3-500 $\mu$m. The negative electrode current collector 134 may have fine surface irregularities formed on the surface thereof to enhance adhesion with the negative electrode active material. For example, the negative electrode current collector 134 may have various shapes, such as a sheet, a foil, a net, a porous body, a foam, a nonwoven body, or the like.

(Negative electrode active material layer 132)

The negative electrode active material layer 132 includes a negative electrode active material and a solid electrolyte. If necessary, the negative electrode active material layer 132 may include a conductive material, a binder and other optional additives. Description about the solid electrolyte, the conductive material and the binder is the same as described with reference to the positive electrode active material layer 114 and will be omitted herein. Meanwhile, the negative electrode active material layer 132 may include carbon nanotubes having a length of 100 $\mu$m or more, similarly to the positive electrode active material layer 114.

(Negative electrode active material)

Particular examples of the negative electrode active material may include: lithium metal; lithium alloys; lithium metal composite oxides; lithium-containing titanium composite oxides (LTO): carbonaceous materials, such as artificial graphite, natural graphite, graphitized carbon fibers or amorphous carbon; metallic compounds capable of alloying with lithium, such as Si, Al, Sn, Pb, Zn, Bi, In, Mg, Ga, Cd, Si alloys, Sn alloys or Al alloys; metal oxides capable of doping/dedoping of lithium, such as $SiO_v$ (0<v<2), $SnO_2$, vanadium oxide, lithium vanadium oxide, $Li_xFe_2O_3(0 \le x \le 1)$ or $Li_xWO_2(0 \le x \le 1)$; composites including the metallic compounds and carbonaceous materials, such as Si-C composites or Sn-C composites; or the like. Such materials may be used alone or in combination.

The negative electrode active material may be present in an amount of 70-100 wt%, preferably 80-99 wt%, based on the total weight of the negative electrode active material layer 132. When the content of the electrode active material satisfies the above-defined range, it is possible to realize excellent energy density, electrode adhesion and electron conductivity.

[Solid electrolyte layer 120]

The solid electrolyte layer 120 is disposed between the positive electrode 110 and the negative electrode 130 and mediates lithium ion transfer between the positive electrode active material and the negative electrode active material. The solid electrolyte layer 120 also functions as a separator layer which separates the positive electrode 110 and the negative electrode 130 physically from each other to prevent a short-circuit between both electrodes.

For example, the solid electrolyte layer 120 is a layer formed of the same solid electrolyte as contained in the positive electrode material. However, the solid electrolyte layer 120 may further include other solid electrolytes or additives, or may be formed of other solid electrolytes.

<Method of manufacturing all-solid-state battery>

The method for manufacturing an all-solid-state battery 100 is not particularly limited. For example, the all-solid-state battery 100 may be manufactured by sequentially introducing materials forming the battery to a cylindrical mold and carrying out pressurization. In a variant, the all-solid-state battery 100 may be manufactured by forming each of the layers of the all-solid-state battery 100, and then stacking and pressurizing the layers. Besides the above-mentioned methods, any method may be used.

<Effects>

To illustrate the technical effects of the above-described embodiment, first, the significance of carbon nanotubes in conventional all-solid-state batteries will be described as a premise.

While an all-solid-state battery provides merits, such as reduction of a risk of electrolyte leakage or fire ignition, it shows demerits because it is a solid. For example, it is important to allow active material particles and solid electrolyte particles to be in contact with each other and to inhibit the interfacial resistance thereof with a view to smooth migration of lithium ions and electrons in charge/discharge reactions of an all-solid-state battery. For this, highly ion conductive coating, such as $LiNbO_2$, is provided frequently on the surface of a positive electrode. However, when particles are spaced apart from one another and isolated due to volumetric swelling, etc. accompanied by charge/discharge, battery characteristics are deteriorated, and thus it is not possible to maintain contact between particles in the conventional surface coating technologies.

Meanwhile, a conductive material including carbon nanotubes, such as VGCF, having high conductivity is generally added in order to impart conductivity to an electrode material. However, it is required to introduce a large amount of conductive material to ensure the conductivity of the whole electrode by needle-like fibers of VGCF having a length of several micrometers. In addition, when active material particles are isolated due to the lack of a conductive material, adverse effects, such as acceleration of decomposition of a solid electrolyte, may occur.

With reference to the above, according to the related art, long carbon nanotubes having a length of 100 μm or more have not been used as a conductive material for a solid electrolyte. It is thought that this is because those skilled in the art recognized that long carbon nanotubes may adversely affect battery characteristics. According to the following Comparative Example 2, it is shown that when using carbon nanotubes having a length of 50 μm, the carbon nanotubes cause aggregation, resulting in degradation of battery capacity as compared to the cases wherein VGCF is used. As such, it can be said that since even carbon nanotubes having a length of 50 μm causes deterioration of battery characteristics according to the related art, those skilled art have no incentive to use longer carbon nanotubes.

In this context, the inventors of the present disclosure have found that use of carbon nanotubes having a length of 100 μm or more as conductive materials, as described in the following Examples, can improve battery capacity and rate characteristics as compared to Comparative Example 1 using VGCF. It is thought that such carbon nanotubes having a length of 100 μm or more solve the aggregation tendency of carbon nanotubes having a length of approximately 50 μm and are dispersed widely in the positive electrode material. It is thought that the carbon nanotubes having a length of 100 μm or more can form an electron conduction network among the active material particles in the electrode material, and between the active material particles and the current collector, by virtue of such dispersion characteristics and the length of carbon nanotubes themselves.

Such characteristics of the carbon nanotubes are significant particularly in all-solid-state batteries. It is thought that since a liquid has fluidity, a conductive material may be dispersed somewhat widely in slurry during the preparation of slurry through mixing of a positive electrode material with the conductive material. Meanwhile, in all-sold-state batteries, it is general to mix a positive electrode material with a conductive material in a powder state. Therefore, when carbon nanotubes contained in the conductive material have high aggregation property, the carbon nanotubes may be hardly dispersed, thereby making it difficult to form an electron conduction path among active material particles spaced apart from one another. However, when using carbon nanotubes which have a length of 100 μm or more, can form a long electron conductive path by virtue of their large length and are shown to have low aggregation property, all of the above-mentioned problems can be solved. As a result, it is thought that high-capacity all-solid-state batteries can be realized in the following Examples, which cannot be realized in the cases using VGCF or carbon nanotubes having a length of approximately 50 μm.

In addition, since a solid electrolyte is used instead of a liquid electrolyte in all-solid-state batteries, it is important to allow active material particles to be in contact with solid electrolyte particles as compared to the cases using a liquid electrolyte having fluidity. For this, a positive electrode material of an all-solid-state battery is prepared by mixing a positive electrode active material with a solid electrolyte. In this manner, contact between the positive electrode material particles and the solid electrolyte particles is ensured, but contact points between the positive electrode active material particles and the positive electrode current collector are reduced accordingly. Therefore, it can be said that long carbon nanotubes capable of forming a relatively long electron conduction path between the current collector and the positive electrode active materials spaced apart from the current collector are highly significant.

Further, it is thought that since the carbon nanotubes significantly longer than the active material particles are entangled with the active material particles, contact between the carbon nanotubes and the active material particles is maintained with ease, even though volumetric swelling/shrinking of the active material particles is repeated due to charge/discharge. As such, long carbon nanotubes can form a so-called matrix structure absorbing the swelling/shrinking of the active material particles, which is preferred also in terms of cycle characteristics and stability of a battery.

The above-mentioned advantages of long carbon nanotubes have not beenappreciated according to the related art, and there was a perception that use of long carbon nanotubes should be avoided in all-solid-state batteries, as described above. Considering this, it can be said that the present disclosure has a great technical significance.

MODE FOR DISCLOSURE

Hereinafter, examples and comparative examples will be described. However, the present disclosure is not limited thereto. In addition, the discussion as described hereinafter is merely exemplary supposition to assist understanding of the present disclosure and is not intended to limit the present disclosure.

<Example 1>

[Preparation of positive electrode material]

First, 61.86 parts by weight of powder of $LiNi_{0.8}Co_{0.1}Mn_{0.1}O_2$ as a positive electrode active material having an average particle diameter of approximately 5 $\mu$m, coated with $LiNbO_2$, and 36.08 parts by weight of powder of $Li_6PS_5Cl$ as an argyrodite-based solid electrolyte were mixed. Then, 2.06 parts by weight of multi-walled carbon nanotubes (MWCNTs) having an average length of approximately 400 $\mu$m were added thereto, and the resultant mixture was mixed by using a mortar to a homogeneous state. In this manner, a positive electrode material was obtained.

[Manufacture of all-solid-state battery]

A positive electrode current collector (SUS plate) 112, a positive electrode material layer 114, a sulfide-based solid electrolyte separator layer 120, Li metal as a negative electrode 132 (thickness 0.1 $\mu$m) and a negative electrode current collector (SUS plate) 134 were stacked in this order and compressed to obtain an all-solid-state battery 100.

<Example 2>

A positive electrode material and an all-solid-state battery including the positive electrode material were obtained in the same manner as Example 1, except that MWCNT having an average length of approximately 250 $\mu$m were used.

< Example 3>

A positive electrode material and an all-solid-state battery including the positive electrode material were obtained in the same manner as Example 1, except that MWCNT having an average length of approximately 125 $\mu$m were used.

<Comparative Example 1>

A positive electrode material and an all-solid-state battery including the positive electrode material were obtained in the same manner as Example 1, except that carbon nanofibers (VGCF-H available from Resonac) having an average length of less than 10 $\mu$m were used instead of MWCNT.

<Comparative Example 2>

A positive electrode material and an all-solid-state battery including the positive electrode material were obtained in the same manner as Example 1, except that MWCNT having an average length of approximately 50 $\mu$m were used.

<Test Example 1: Shape observation>

The positive electrode material according to each of Examples 1 to 3 and Comparative Example 2 was observed with a scanning electron microscope (SEM). It is shown after the observation that, in Examples 1 to 3, relatively large positive electrode active material particles 10, relatively small solid electrolyte particles 12 and carbon nanotubes 14 are randomly distributed, as shown in FIG. 1. The carbon nanotubes 14 are substantially untangled one by one and dispersed. Many carbon nanotubes 14 are in contact with the surfaces of a plurality of positive electrode active material particles 10 and a plurality of solid electrolyte particles 12. Meanwhile, in Comparative Example 2, the carbon nanotubes are observed to cause aggregation among themselves. In Comparative Example 2, many carbon nanotubes are in contact with the surface of a single positive electrode active material particle 10 and/or single solid electrolyte particle 12.

<Test Example 2: Battery capacity and rate characteristics>

The all-solid-state battery according to each of Examples and Comparative Examples was subjected to aging by carrying out charge/discharge twice, in a thermostat maintained at 60°C with a charge cut-off voltage of 4.25V and a discharge cut-off voltage of 3V at a charge rate of 0.05C and a discharge rate of 0.05C (1C= 200 mAh/g). Herein, the discharge capacity at the initial charge/discharge cycle, divided by the discharge capacity (reference value) of Comparative Example 1, is defined as 'initial capacity' according to the following Mathematical formula 1.

[Mathematical formula 1]

$$\text{Inital capacity} = \frac{\text{Discharge capacity (mAh/g) of tested battery at initial charge/discharge cycle}}{\text{Discharge capacity (mAh/g) of battery of Comparative example 1 at initial charge/discharge cycle}} \times 100\%$$

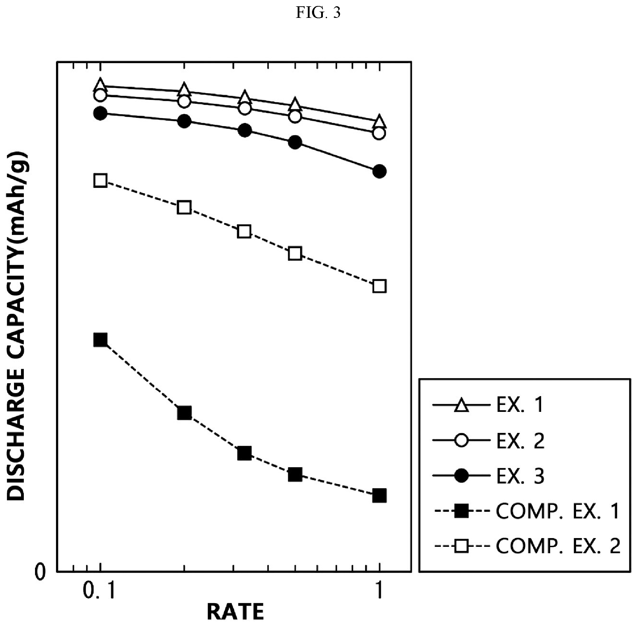

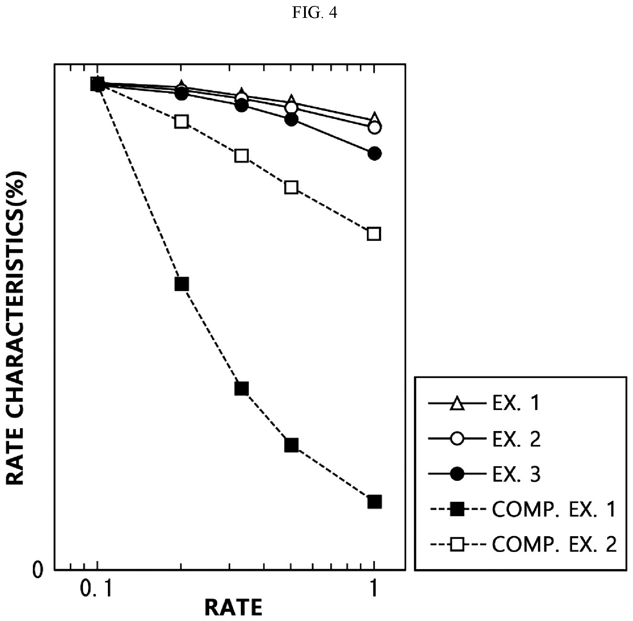

Then, the rate test was carried out while fixing a charge rate of 0.1C and changing a discharge rate in the order of 0.1C→0.2C→0.33C→0.5C→1.0C. FIG. 3 and FIG. 4 are graphs illustrating a change in discharge capacity depending on discharge rate in Examples 1 to 3 and Comparative Examples 1 and 2. The vertical axis in FIG. 3 shows a measured value of discharge capacity, and the vertical axis in FIG. 4 shows a discharge capacity standardized with a discharge capacity of 0.1C as 100% for each example to easily compare changes in discharge capacities of Examples and Comparative Examples (the standardized discharge capacity is referred to as a 'rate characteristic').

The following table 1 shows the manufacturing conditions, initial capacity values and results of formation of a sufficient electron conduction path determined from SEM observation in Examples 1 to 3 and Comparative Examples 1 and 2. Herein, when the carbon nanotubes in a scanning electron microscopic (SEM) image are in contact with the surfaces of a plurality of positive electrode active material particles 10, it is judged as sufficient formation of an electron conduction path. Otherwise, it is judged as insufficient formation of an electron conduction path.

[Table 1]

| | Conductive material | | | | | Initial capacity (%) | Electron conduction path |
|---|---|---|---|---|---|---|---|
| | Type | Content (wt%) | Average length (μm) | Average diameter (nm) | Aspect ratio (average length/average diameter) | | |
| Ex. 1 | MWCNT | 2.06 | 400 | 5-10 | 80,000-40,000 | 104.1 | Sufficiently formed |
| Ex. 2 | MWCNT | 2.06 | 250 | 5-10 | 50,000-25,000 | 107.6 | Sufficiently formed |
| Ex. 3 | MWCNT | 2.06 | 125 | 5-10 | 25,000-12,500 | 109.6 | Sufficiently formed |
| **Comp.** Ex. 1 | VGCF | 2.06 | <10 | 150 | 33-67 | 100 | Insufficient |
| Comp. Ex. 2 | MWCNT | 2.06 | 50 | 5-10 | 10,000-5,000 | 97.5 | Insufficient |

<Test example 3: Life characteristics of battery>

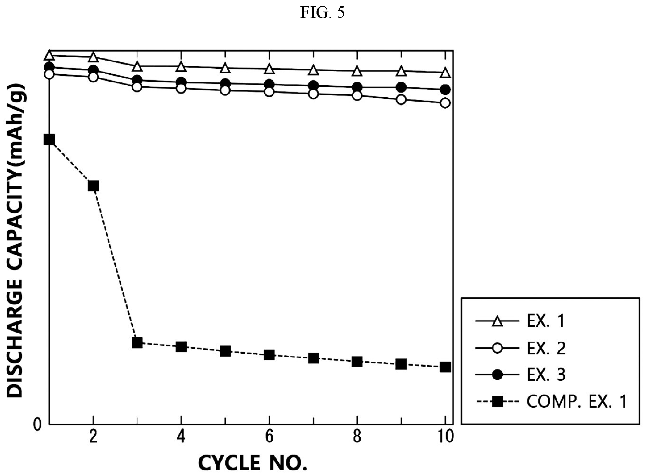

Subsequently, cycle characteristics of Examples 1 to 3 and Comparative Example 1 were examined. Specifically, for the all-solid-state batteries of Examples 1 to 3 and Comparative Example 1, aging was carried out twice through charge/discharge in the same manner as Test example 2, and then the same charge/discharge cycle was repeated eight times with a constant current of 0.5 C. That is, including the first and second charge/discharge cycles, a total of 10 charge/discharge cycles were repeated. FIG. 5 is a graph illustrating cycle characteristics of Examples 1 to 3 and Comparative Example 1. As shown in FIG. 5, it is confirmed that Examples 1 to 3 exhibit excellent cycle characteristics as compared to Comparative Example 1.

<Discussion of test results of Examples and Comparative Examples>

Hereinafter, the test results will be discussed. However, the following discussion is a hypothesis at the present time, and the present disclosure is not bound by theory.

As described above, when comparing the initial capacities based on Comparative Example 1 using carbon nanofibers (VGCF) used conventionally as a conductive material, the initial capacities of Examples 1 to 3 using carbon nanotubes having a length of 100 $\mu$m or more are superior to the initial capacity of Comparative Example 1, and the initial capacity of Comparative Example 2 using carbon nanotubes having a length of approximately 50 $\mu$m is inferior to that of Comparative Example 1.

Considering the results observed by SEM, it is considered that the electron conductivity of the entire positive electrode material (especially the electron conductivity among the positive electrode active material particles and the electron conductivity between the positive electrode active material and the positive electrode current collector) is improved, because the carbon nanotubes having a length of 100 $\mu$m or more have such a large length that they may be in contact with a plurality of positive electrode active material particles and are easily untangled one by one and dispersed. As a result, first, the carbon nanotubes mediate the electronic conduction from the positive electrode active material in the vicinity of the current collector to the current collector, thereby activating and stabilizing charge/discharge reactions. Second, the carbon nanotubes mediate the electronic conduction from the positive electrode active material spaced apart from the current collector to the positive electrode active material in the vicinity of the current collector, resulting in the formation of an electron conduction path from the positive electrode active material spaced apart from the current collector to the positive electrode active material in the vicinity of the current collector. In this manner, more (ideally all) positive electrode active material particles can contribute to the charge/discharge reactions, so that each positive electrode active material particle in the positive electrode active material layer can participate in the charge/discharge reactions uniformly. As a result, it is thought that the battery capacity is improved to provide a battery capacity close to the theoretical capacity.

In addition, as shown in FIG. 3 and FIG. 4, Examples 1 to 3 using carbon nanotubes having a length of 100 $\mu$m or more show rate characteristicssignificantly superior to the rate characteristics of Comparative Example 1. That is, even if high-speed discharge is performed, the battery characteristics are not excessively degraded as compared to low-speed discharge, and the batteries have excellent high-speed discharge characteristics. Since the carbon nanotubes having a length of 100 $\mu$m or more form electron conduction pathsamong the positive electrode active material particles and between the positive electrode active material particles and the positive electrode current collector, more positive electrode active materials can participate in the charge/discharge reactions more uniformly and efficiently. Accordingly, it is thought that it is possible to inhibit a decrease in capacity uponhigh-speed charge and discharge. It is also thought that since the internal resistance of the electrode is reduced by the widely dispersed carbon nanotubes, heat loss under a high level of electric current can be inhibited to allow efficient charge/discharge.

In addition, as shown in FIG. 5, Examples 1 to 3 using carbon nanotubes having a length of 100 $\mu$m or more provide cycle characteristics superior to the cycle characteristics of Comparative Example 1. Sincesuch long carbon nanotubes become entangled with the positive electrode active material particles, even if thepositive electrode active material repeats shrinking/swelling accompanied with charge/discharge, the above-mentioned electron conduction path may be retained. As a result of the carbon nanotubes functioning as a conductive matrix absorbing such shrinking/swelling of the positive electrode active material, it is assumed that the battery has improved life characteristics.

On the contrary, carbon nanotubes having a length of 50 $\mu$m tend to aggregate among themselves. For this reason, there is a limitation in imparting conductivity by the carbon nanotubes, and electron conduction among the active material particles and electron conduction between the active material particles and the current collector cannot be efficiently promoted. As a result, it is considered that sufficient battery capacity and rate characteristics cannot be obtained. Meanwhile, shorter (e.g., 10 $\mu$m or less in length) carbon nanotubes generally tend to be more easily dispersed and not agglomerated as compared to carbon nanotubes having a length of 50 $\mu$m, but it is considered that such short carbon nanotubes cannot sufficiently form an electron conduction path among the active material particles.

[Description of drawing numerals]

10:    Positive electrode active material particles
12:    Solid electrolyte particles
14:    Carbon nanotubes

**EP 4 756 896 A1**

**Claims**

1. A positive electrode material for an all-solid-state battery, comprising:

   a lithium transition metal oxide,
   a solid electrolyte, and
   carbon nanotubes,
   wherein at least one carbon nanotube of the carbon nanotubes has a length of 100 $\mu$m or more.

2. The positive electrode material according to claim 1,
   wherein at least one carbon nanotube of the carbon nanotubes has a length of 100-500 $\mu$m.

3. The positive electrode material according to claim 1,
   wherein at least one carbon nanotube of the carbon nanotubes has a length of 100-200 $\mu$m.

4. A positive electrode material for an all-solid-state battery, comprising:

   positive electrode active material particles containing a lithium transition metal oxide and having an average particle diameter of 1-20 $\mu$m,
   a solid electrolyte, and
   carbon nanotubes which are in contact with a plurality of positive electrode active material particles to form an electron conduction path among the positive electrode active material particles.

5. The positive electrode material according to any one of claims 1 to 4,
   wherein the carbon nanotubes are contained in an amount of 0.01-10 wt% in the positive electrode material.

6. The positive electrode material according to any one of claims 1 to 4,
   wherein the carbon nanotubes are multi-walled carbon nanotubes.

7. The positive electrode material according to any one of claims 1 to 4,
   wherein the carbon nanotubes form an electron conduction path among a plurality of particles that are not in contact with one another.

8. The positive electrode material according to any one of claims 1 to 4,
   wherein the carbon nanotubes are untangled while not forming aggregates or bundles substantially.

9. The positive electrode material according to any one of claims 1 to 4,
   wherein the lithium transition metal oxide comprises nickel at 50 mol% or more based on the total weight of transition metals.

10. The positive electrode material according to any one of claims 1 to 4,
    wherein the solid electrolyte is a sulfide-based solid electrolyte.

11. The positive electrode material according to claim 1,
    wherein the carbon nanotubes have an average diameter of 2-20 nm.

12. The positive electrode material according to claim 1,
    wherein the carbon nanotubes have an aspect ratio of 10,000-100,000.

13. An all-solid-state battery comprising:

    a positive electrode comprising the positive electrode material as defined in any one of claims 1 to 4,
    a negative electrode, and
    a solid electrolyte layer between the positive electrode and the negative electrode.

14. A method for preparing a positive electrode material for an all-solid-state battery, comprising a step of mixing a lithium transition metal oxide, a solid electrolyte and carbon nanotubes having a length of 100 $\mu$m or more.

FIG. 1

FIG. 2

FIG. 3

FIG. 4

EP 4 756 896 A1

FIG. 5

20

## INTERNATIONAL SEARCH REPORT

| International application No. |
|---|
| **PCT/KR2024/021188** |

**A. CLASSIFICATION OF SUBJECT MATTER**

**H01M 4/131**(2010.01)i; **H01M 4/62**(2006.01)i; **H01M 10/0562**(2010.01)i; **C01B 32/158**(2017.01)i; **H01M 4/525**(2010.01)i; **H01M 4/505**(2010.01)i; **H01M 4/1391**(2010.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 4/131(2010.01); H01M 10/052(2010.01); H01M 10/0567(2010.01); H01M 4/02(2006.01); H01M 4/58(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극재 (cathode material), 전고체 전지 (all solid state battery), 카본 나노튜브 (carbon nanotube, CNT), 길이 (length), 황화물계 고체전해질 (sulfide solid electrolyte)

**C. DOCUMENTS CONSIDERED TO BE RELEVANT**

| Category* | Citation of document, with indication, where appropriate, of the relevant passages | Relevant to claim No. |
|---|---|---|
| X | JP 2021-144906 A (MAXELL HOLDINGS LTD.) 24 September 2021 (2021-09-24)<br>See abstract; paragraphs [0020], [0021], [0023], [0026], [0035], [0043], [0054], [0064] and [0092]; and claim 1. | 1-14 |
| A | JP 2014-238944 A (HITACHI CHEMICAL CO., LTD.) 18 December 2014 (2014-12-18)<br>See abstract; paragraph [0066]; claims 1-7; and figure 2. | 1-14 |
| A | KR 10-2016-0051610 A (LG CHEM, LTD.) 11 May 2016 (2016-05-11)<br>See abstract; and claims 1-9. | 1-14 |
| A | KR 10-2021-0119778 A (SAMSUNG SDI CO., LTD.) 06 October 2021 (2021-10-06)<br>See abstract; and claims 1-12. | 1-14 |
| A | JP 2004-220909 A (MITSUBISHI MATERIALS CORP.) 05 August 2004 (2004-08-05)<br>See abstract; and claims 1-12. | 1-14 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 April 2025** | **08 April 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/021188**

| Patent document cited in search report | | | Publication date (day/month/year) | Patent family member(s) | | | Publication date (day/month/year) |
|---|---|---|---|---|---|---|---|
| JP | 2021-144906 | A | 24 September 2021 | JP | 7469920 | B2 | 17 April 2024 |
| JP | 2014-238944 | A | 18 December 2014 | JP | 6197384 | B2 | 20 September 2017 |
| KR | 10-2016-0051610 | A | 11 May 2016 | KR | 10-1829104 | B1 | 13 February 2018 |
| KR | 10-2021-0119778 | A | 06 October 2021 | CN | 114930599 | A | 19 August 2022 |
| | | | | KR | 10-2571752 | B1 | 25 August 2023 |
| | | | | US | 2023-0146100 | A1 | 11 May 2023 |
| | | | | WO | 2021-194097 | A1 | 30 September 2021 |
| JP | 2004-220909 | A | 05 August 2004 | None | | | |

Form PCT/ISA/210 (patent family annex) (July 2022)

**EP 4 756 896 A1**

REFERENCES CITED IN THE DESCRIPTION

**Patent documents cited in the description**

- JP 2023221543 A
- JP 2020507893 A
- JP 2022529987 A
- JP 2023132317 A
- JP 2021144906 A